# FASCICULE DE BREVET EUROPEEN

(11) **EP 3 329 074 B1**
(45) Date de publication et mention de la délivrance du brevet: **25.09.2024**
(21) Numéro de dépôt: 16760128.5
(22) Date de dépôt: 29.07.2016
(51) Int. Cl.: E05D 15/06, E05F 15/643, B61B 1/02

(54) **SYSTÈME DE GUIDAGE ET DE SUPPORT D'UN VANTAIL DE PORTE PALIÈRE DE QUAI**
SYSTEM ZUM FÜHREN UND STÜTZEN EINES FLÜGELS EINER PLATTFORMZUGANGSTÜR
SYSTEM FOR GUIDING AND SUPPORTING A LEAF OF A PLATFORM-ACCESS DOOR

(30) Priorité: 31.07.2015 FR 1557442
(43) Date de publication de la demande: 06.06.2018
(73) Titulaire: Faiveley Transport Tours, 37700 Saint Pierre des Corps (FR)
(72) Inventeur: MAREAUX, Sébastien, 37100 Tours (FR)
(74) Mandataire: Novagraaf Technologies
(86) Numéro de dépôt international: PCT/FR2016/051995
(87) Numéro de publication internationale: WO 2017/021643

(56) Documents cités:
- EP-A2- 1 016 769
- CN-U- 203 361 842
- DE-C1- 4 441 152
- FR-A1- 2 903 137
- JP-A- 2010 105 547
- KR-A- 20130 049 069
- US-B1- 6 536 077

## Description

L'invention concerne un système de guidage et de support d'un vantail de porte palière de quai, ainsi qu'une porte palière de quai équipée d'un tel système de guidage et de support.

Les façades de quai permettent d'isoler la plateforme de quai en tant que telle de la voie de circulation le long de laquelle le quai s'étend, lorsqu'aucune circulation ne se produit sur ladite voie de circulation. Toutefois, lorsqu'une rame est stationnée à quai le long du quai, la façade de quai doit permettre un accès aux usagers aux voitures voyageur de la rame stationnant. Pour cela, la façade de quai comporte une série de portes palière agencée de sorte à s'étendre en regards des portes d'accès des voitures voyageur susceptible de stationner le long du quai. De manière connue en soi, une porte palière de quai forme un module qui est composé d'au moins une partie fixe et d'un vantail coulissant associé qui peut se mouvoir entre une position ouverte et une position fermée (et inversement) selon une direction horizontale dans le plan du vantail et sensiblement parallèle à un nez de quai sur lequel est positionnée la porte palière. En position ouverte, le vantail dégage au moins en partie une ouverture permettant un passage des usagers adjacente à la partie fixe de la porte palière. En position fermée, le vantail obstrue cette ouverture. Pour cela, un système de guidage et de support est prévu entre la partie fixe et le vantail coulissant associé, ainsi qu'une motorisation pour déplacer le vantail coulissant dans ses mouvements de translation entre les positions ouverte et fermée.

De manière générale, les portes palières de quai comportent deux paires de partie fixe/vantail coulissant positionnées de manière symétrique en miroir. Les deux parties fixes sont séparées l'une de l'autre par un seuil de porte, l'ensemble délimitant l'ouverture permettant le passage des usagers. Les deux vantaux coulissant ont alors la possibilité de se déplacer selon des mouvements de translation horizontale dans le plan des vantaux qui sont symétriques l'un de l'autre entre la position fermée et la position ouverte et inversement. Chacun des vantaux coulissant ayant un système de guidage et de support et une motorisation associés.

D'autre part, les normes imposées pour les portes palières de quai obligent de prévoir au moins un système de guidage et de support qui permette :
- Une résistance à l'effet de pompage induit par le passage d'une rame sur la voie de circulation le long de la façade de quai, donc de la porte palière équipée du système de guidage et de support
- Une résistance au vent
- Une résistance à d'éventuelles poussées induites par les usagers pouvant se trouver sur la plateforme de quai
- Un support de la masse du vantail coulissant que relie le système de guidage et de support à la partie fixe associée.

De tels systèmes de guidage et de support sont illustrés par exemple dans le document JP 2010-105547. Il ressort que de tels systèmes de guidages nécessitent de nombreuses pièces mobiles ou en frottement l'une avec les autres. Ceci complexifie les interventions de maintenance, augmente les risques de défaillance. Cela implique alors un coût de fabrication et d'entretien élevé.

D'autres exemples de systèmes de guidage sont décrits et représentés dans les documents KR 2013 0049069 A FR2903137A1, DE4441152C1, et EP1016769A2.

Un but de l'invention est de fournir un système de guidage et de support d'un vantail coulissant de porte palière de quai qui soit plus simple et moins coûteux à produire et à entretenir.

A cette fin, il est prévu selon l'invention, un système de guidage et de support pour un vantail de porte palière de quai tel que défini dans la revendication 1.

Avantageusement, mais facultativement, le système de guidage et de support selon l'invention présente au moins l'une des caractéristiques techniques additionnelles suivantes :
- le second galet secondaire est situé entre le galet principal et le premier galet secondaire ;
- le second galet secondaire est décalé dans la direction du mouvement de translation horizontale par rapport au premier galet secondaire ;
- Le système comporte un deuxième ensemble de galets destiné à guider latéralement le rail dans une direction horizontale perpendiculaire à la direction du mouvement de translation horizontale ;
- le deuxième ensemble de galets comporte une première paire de galets positionnée au niveau de l'un parmi le galet principal et un des galets secondaires ;
- le deuxième ensemble comporte une deuxième paire de galets positionnée au niveau de l'autre parmi le galet principal et l'un des galets secondaires ;
- le premier ensemble de galets comporte un galet supplémentaire en contact avec la surface supérieure d'appui du rail et positionnée à la verticale du galet principal ;
- les surfaces inférieure et supérieure d'appui comportent des bandes de roulement inscrites dans un cercle de sorte à former une fonction pivot entre le rail et le premier ensemble de galets ; et,
- les galets du premier ensemble de galets sont montés mobiles à translation sur leur axe à l'encontre de moyens élastiques de limitation (28), les moyens de élastiques de limitation formant des ressorts tarés.

Il est aussi prévu, selon l'invention, une porte palière de quai comportant un seuil , un premier panneau fixe et un premier vantail pouvant se déplacer par rapport au premier panneau fixe selon un mouvement de translation horizontale dans un plan du vantail entre des positions ouverte et fermée dans lesquelles le premier vantail dégage ou obstrue au moins en partie une ouverture adjacente au premier panneau fixe, ainsi qu'un système de guidage et de support du premier vantail présentant au moins l'une des caractéristiques techniques précédentes.

Avantageusement, mais facultativement, la porte palière selon l'invention présente au moins l'une des caractéristiques techniques additionnelles suivantes :
- le rail est solidaire du premier vantail
- le système de guidage et de support est situé dans une partie inférieure de la porte palière ;
- la porte palière comporte :
   ∘ un second panneau fixe, séparé du premier panneau fixe par l'ouverture et le seuil ;
   ∘ un second vantail pouvant se déplacer par rapport au second panneau fixe selon un mouvement de translation horizontale dans un plan du vantail entre des positions ouverte et fermée dans lesquelles le second vantail dégage ou obstrue en partie l'ouverture, le mouvement de translation horizontale du second vantail étant symétrique du mouvement de translation horizontale du premier vantail ; et,
   ∘ un système de guidage et de support du second vantail présentant au moins l'une des caractéristiques techniques précédentes ;
- la porte palière comporte un mécanisme d'entrainement des vantaux comportant un moteur d'entrainement, deux éléments allongés flexibles d'entrainement fixés de manière croisée, le moteur d'entrainement entraînant un seul des deux éléments allongés flexibles d'entrainement, l'un des éléments allongés flexibles d'entrainement comportant deux extrémités fixées respectivement à une extrémité gauche du rail du système de guidage et de support des premier et second vantaux et l'autre des éléments allongés flexibles d'entrainement comportant deux extrémités fixées respectivement à une extrémité droite du rail du système de guidage et de support des premier et second vantaux ;
- les éléments allongés flexibles d'entrainement cheminent en partie dans ou sous le seuil ;
- les éléments allongés flexibles d'entrainement sont des courroies, des chaînes ou des câbles ;
- le moteur d'entrainement est situé dans la partie basse de l'un parmi les premier et second panneaux fixes ; et,
- le moteur d'entrainement est positionné sous le rail du système de guidage et de support de l'un parmi les premier et second panneaux fixes.

D'autres caractéristiques et avantages de l'invention apparaîtront lors de la description ci-après d'un mode de réalisation. Aux dessins annexés :
- la figure 1 est une vue en trois dimensions d'un module de porte palière de quai ;
- la figure 2 est une vue en trois dimensions d'un système de guidage et de support selon l'invention pour la porte palière de la figure 1, ainsi qu'un mécanisme de motorisation ;
- la figure 3 est une vue schématique du mécanisme de motorisation de la figure 2 ;
- la figure 4 est une vue partielle en trois dimensions d'une extrémité du système de la figure 2 ;
- la figure 5 est une vue en trois dimensions du système de guidage et de support selon l'invention ;
- la figure 6 est vue en trois dimensions des ensembles de galets du système des figures 2 et 5 selon un mode de réalisation où le galet principal ne fait pas partie de l'invention;
- la figure 7 est une vue de côté du système de la figure 5 ;
- la figure 8 est une vue de face des ensembles de galets de la figure 6 ;
- la figure 9 est une vue tridimensionnelle en coupe des ensembles de galets selon un mode de réalisation d'un système de guidage et de support selon l'invention ; et,
- la figure 10 est une vue partielle en coupe au niveau de l'ensemble des galets secondaires du mode de réalisation d'un système de support et de guidage selon l'invention.

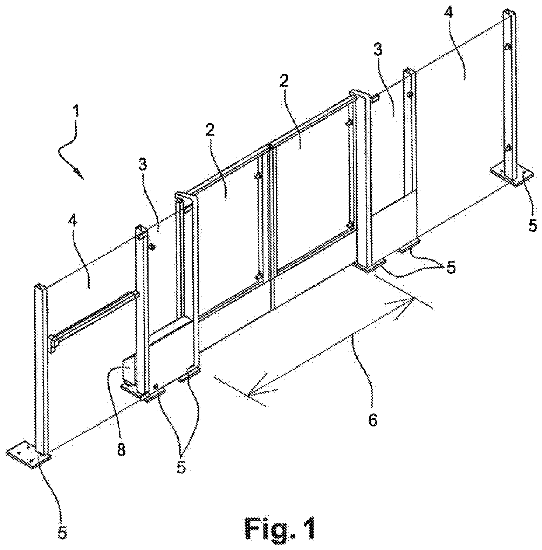

En référence à la figure 1, comme nous l'avons indiqué dans le préambule de cette description, une porte palière 1 comporte, ici, d'une extrémité à l'autre, une première porte de secours 4, une première partie fixe 3, un premier vantail coulissant 2 associé à la première partie fixe 3, un deuxième vantail coulissant 2, une deuxième partie fixe 3 associée au deuxième vantail coulissant 2, et une deuxième porte de secours 4. En variante de réalisation, les première et deuxième portes de secours 4 peuvent être des panneaux fixes. Un seuil de porte 6 sépare les deux parties fixes 3 l'une de l'autre et délimite avec elle une ouverture adjacente aux partie fixes 3 d'accès. Les premier et deuxième vantaux coulissants sont montés mobiles à translation horizontale dans le plan du vantail coulissant sur la partie fixe 3 qui leur est associée via un système de guidage et de support 8 selon l'invention. Ainsi, chaque vantail coulissant peut prendre une position fermée dans laquelle il obstrue au moins en partie l'ouverture adjacente et une position ouverte dans laquelle il dégage au moins en partie l'ouverture adjacente précitée. De plus, les deux vantaux coulissants sont animés de mouvements de translation symétriques et, de préférence, synchronisés.

Il est à noter que le système de guidage et de support 8 selon l'invention est positionné, ici, en partie basse de la porte palière, et donc de la partie fixe 3 et du vantail coulissant 2 qu'il relie. De plus, comme nous le verrons plus loin, le mécanisme de motorisation des vantaux coulissant 2 est lui aussi situé dans cette partie basse. En variante de réalisation, le système de guidage et de support 8 et/ou le mécanisme de motorisation peuvent être situés au niveau d'une quelconque partie de la porte palière et donc de la partie fixe 3 et du vantail coulissant 2 associé.

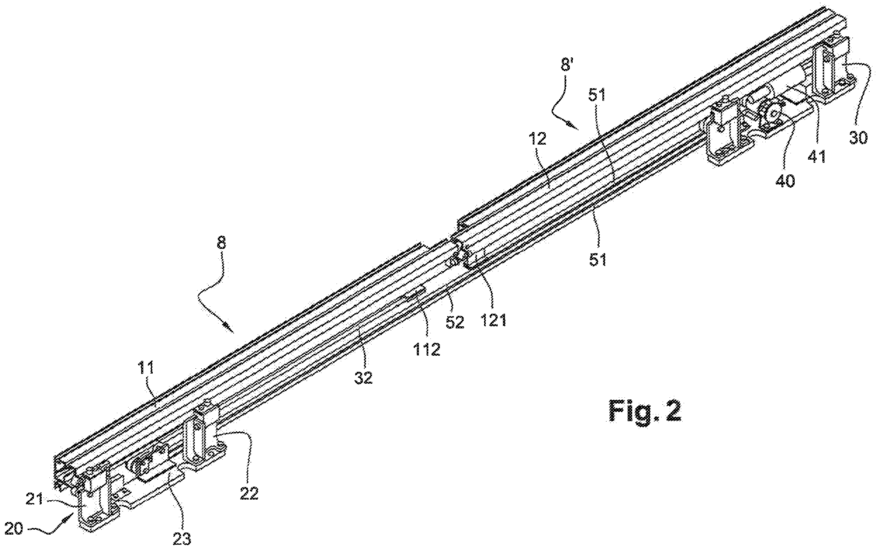

En référence maintenant à la figure 2, nous allons décrire plus en détail le système de guidage et de support 8, 8' selon l'invention. Ici, le premier système de guidage et de support 8 selon l'invention permet le montage du premier vantail coulissant 2 sur la première partie fixe 3 de la porte palière 1 et le deuxième système de guidage et de support 8' selon l'invention permet le montage du deuxième vantail coulissant 2 sur la deuxième partie fixe 3 de la porte palière 1. Les deux systèmes de guidage et de support 8 et 8' selon l'invention sont symétriques en miroir. Le premier système de guidage et de support 8 selon l'invention comporte un rail 11 et un support de rail 20. Le deuxième système de guidage et de support 8' selon l'invention comporte un deuxième rail 12 et un deuxième support de rail 30. Les rails 11 et 12 sont, ici identiques et les supports de rail 20, 30 sont symétriques en miroir. Dans la suite, nous ne décrirons que le premier système de guidage et de support 8 selon l'invention, description qui s'applique mutatis mutandis au deuxième système de guidage et de support 8' selon l'invention.

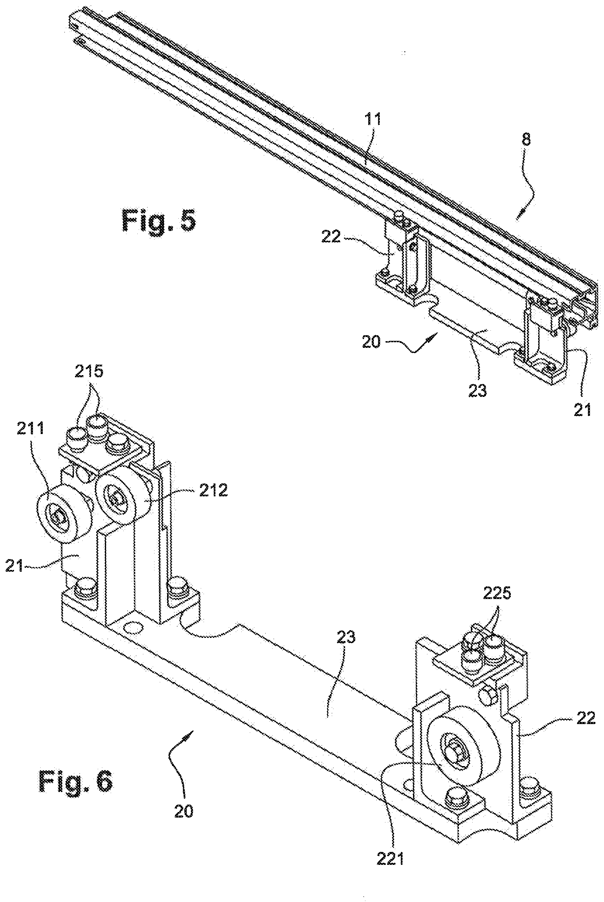

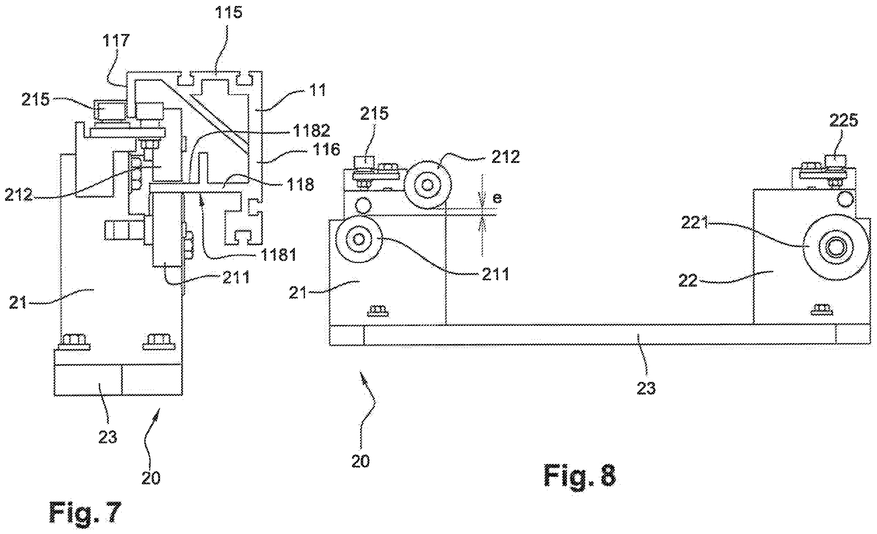

En référence aux figures 5 à 8, le rail est un profilé et est fixé sur le vantail coulissant 2. En section, le rail 11 est, ici illustré, globalement de forme rectangle. En variante, d'autres formes sont possibles. Il comporte, donc ici, une paroi supérieure 115, une paroi latérale externe (à droite sur la figure 7) connectée à la paroi supérieure 115. Le rail 11 comporte une paroi inférieure 118 connectée sur un bord latéral à la paroi latérale externe 116. La paroi inférieure 118 comporte une surface inférieure d'appui 1181 et une surface supérieure d'appui 1182. Le rail 11 comporte en outre une paroi latérale interne 117 (à gauche sur la figure 7) connecté par un bord supérieur à la paroi supérieure 115. La paroi latérale interne 117 ne s'étend verticalement que sur une partie supérieure d'une hauteur de la section du rail 11. Les parois latérale interne 117 et inférieure 118 n'étant pas connectées directement l'une avec l'autre, elles définissent une ouverture longitudinale permettant d'interfacer le rail 11 avec un support de rail 20.

Le support de rail 20 comporte une platine 23 formant une base permettant de fixer le support de rail 20 sur le nez de quai. Il comprend un premier pilier 22 fixé sur la platine 23 et s'étendant en saillie de celle-ci verticalement. Sur un coté du premier pilier 22, le support de rail comporte un galet principal 221 monté libre à rotation sur le premier pilier 22 selon un axe de rotation perpendiculaire à un plan du vantail coulissant 2, ici horizontale. D'autre part, le premier pilier 22 comporte, à un sommet, une première paire de galets 225 montés mobiles à rotation sur le premier pilier 22 selon un axe de rotation vertical. La première paire de galets 225 est positionnée au niveau du galet principal 221, au droit de celui-ci, ici. Lorsque le rail 11 est positionné dans le support de rail 20, la surface inférieure d'appui 1181 de la paroi inférieure 118 du rail 11 vient en appui sur le galet principal 221. Dans le même temps, la paroi latérale interne 117 est reçue entre les deux galets 225 de la première paire de galets 225.

Le support de rail 20 comprend un deuxième pilier 21 fixé sur la platine 23, à distance du premier pilier 22, et s'étendant en saillie de celle-ci verticalement. Sur un coté du deuxième pilier 21, le support de rail comporte des premier 211 et second 212 galets secondaires montés libres à rotation sur le deuxième pilier 21 selon un axe de rotation perpendiculaire à un plan du vantail coulissant 2, ici horizontale. Le deuxième galet secondaire 212 est positionné à distance, verticalement, du premier galet secondaire 211 de sorte qu'une distance e entre un point haut d'une surface de roulement du premier galet 211 et un point bas d'une surface de roulement du deuxième galet secondaire 212 soit équivalente à une épaisseur de la paroi inférieure 118 du rail 11, avec un jeu fonctionnel. Ainsi lorsque le rail 11 est positionné dans le support de rail 20, la surface supérieure d'appui 1182 de la paroi inférieure 118 du rail 11 vient en appui sur le deuxième galet secondaire 212, et la surface inférieure d'appui 1181 de la paroi inférieure 118 du rail 11 vient en appui sur le premier galet secondaire 211. D'autre part, horizontalement, le deuxième galet secondaire 212 est décalé du premier galet secondaire 211 de sorte à ce que le deuxième galet secondaire 212 se trouve entre le premier galet secondaire 211 et le galet principal 221 selon une direction de déplacement du rail 11. D'autre part, les premier 211 et second 212 galets secondaire sont, ici, dans un même plan que le galet principal 221. En variante, ils sont dans des plans différents mais parallèles. De plus, le deuxième pilier 21 comporte, à un sommet, une deuxième paire de galets 215 montés mobiles à rotation sur le deuxième pilier 21 selon un axe de rotation vertical. La deuxième paire de galets 215 est positionnée au niveau de l'un des premier 211 et second 212 galets secondaires, au droit de celui-ci, ici. Dans le cas présent illustré aux figures, la deuxième paire de galets 215 est positionnée au droit du premier galet secondaire 211. Lorsque le rail 11 est positionné dans le support de rail 20, la paroi latérale interne 117 est reçue entre les deux galets 215 de la deuxième paire de galets 215. Il bien entendu que la première paire de galets 225 est alignée avec la deuxième paire de galets 215.

Ainsi, un premier ensemble de galets est formé du galet principal 221 et des premier 211 et second 212 galets secondaires. Le premier rôle de cet ensemble de galets est de supporter le vantail coulissant 2 et de le guider durant ses passages de la position fermée à la position ouverte et inversement. Le galet principal 221 supporte deux fois la masse du vantail coulissant 2 : il présente à cette fin un diamètre supérieur à un diamètre des galets secondaires 211,212. Les galets secondaires 211,212 assurent que le vantail coulissant 2 ne bascule pas dans son plan quel que soit la position qu'il occupe.

De même, un deuxième ensemble de galets est formé des première 225 et deuxième 215 paires de galets. Le premier rôle de ce deuxième ensemble de galets est de guider latéralement, selon une direction horizontale perpendiculaire à la direction du mouvement de translation horizontale du vantail coulissant 2, le rail 11 fixé au vantail coulissant 2. Cela permet de reprendre les efforts dus à l'effet de pompage et à la poussée de foule, ou encore du vent, qui s'appliquent au vantail coulissant 2.

Au sein de la porte palière 1 selon l'invention, le support de rail est positionné dans la partie fixe 3 associé au vantail coulissant 2 que le système de guidage et de support 8 selon l'invention relie, de sorte que :
- le premier pilier 22 soit du côté de l'ouverture adjacente à la partie fixe 3 de la porte palière 1 selon l'invention
- le deuxième pilier 21 soit du côté de la partie fixe 3, opposé à l'ouverture adjacente, c'est-à-dire du côté de la porte de secours 4, dans le cas ici illustré.

Le système de guidage et de support 8 selon l'invention tel qu'il vient d'être décrit comporte moins de pièces mobiles puisque le nombre de galets a été réduit, en particulier pour le premier ensemble de galets. De plus, aucune des pièces procédant au guidage et au support du vantail coulissant 2 ne frotte avec le rail 11 : il n'y a que des roulements. Ainsi les coûts d'entretien sont minimisés, et le rendement mécanique est proche de 1, ce qui génère des économies d'énergie.

Selon une variante de réalisation, les galets des premier 225 et deuxième 215 paires de galets peuvent être remplacés par des patins de frottements, par exemple en PTFE (pour « polytétrafluoroéthylène »).

Dans un mode de réalisation, le galet principal 221 peut être remplacé par deux galets plus petits, par exemple similaire aux galets 211 et 212. Cela permet de standardiser l'ensemble des galets utilisés : ce qui simplifie la fabrication et la maintenance.

Selon un autre mode de réalisation, un galet supplémentaire 2214 peut être associé au galet principal 221 sur le premier pilier 22. Dans ce cas, les deux galets principal 221 et supplémentaire sont positionnés sur le premier pilier 22 de manière similaire ou symétrique au positionnement des deux galets secondaires 211 et 212 sur le deuxième pilier 21. Cela permet de prévenir un basculement, dans son plan, du vantail en position ouverte dans certaines situations.

Dans un mode de réalisation, les galets principal 221 et secondaires 211 et 212 (ainsi que l'éventuel galet supplémentaire) sont des galets en forme de chevrons, roulant sur une bande de roulement galbée aménagée sur les surfaces 1181 et 1182 du rail 11. Cela permet un auto-centrage du vantail 2 sur lesdits galets.

Dans un autre mode de réalisation, les galets principal 221 et secondaires 211 et 212 (ainsi que l'éventuel galet supplémentaire) sont réglables en position, en particulier selon leurs axes de rotation afin de permettre un ajustement de la verticalité du vantail 2 ainsi que de l'alignement de ce dernier par rapport à l'autre ventail 2 de la porte palière 1.

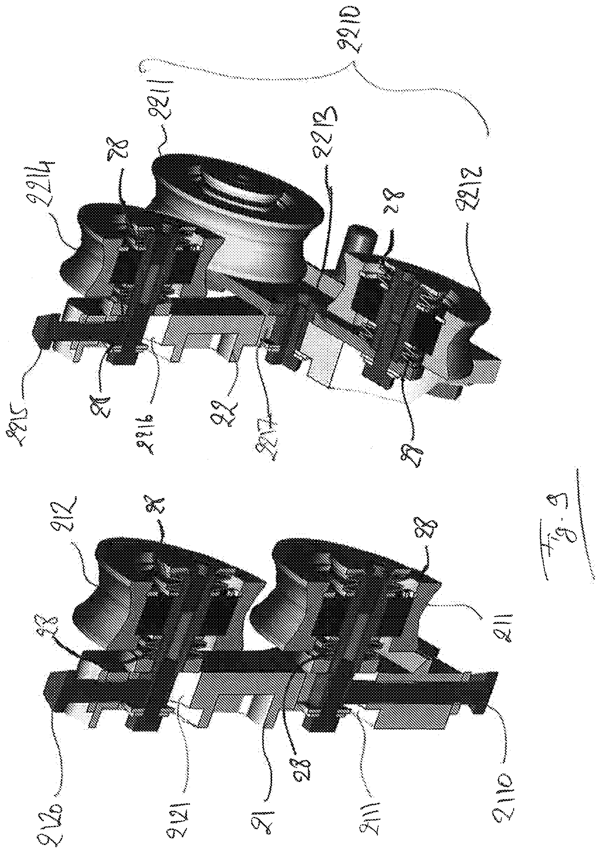

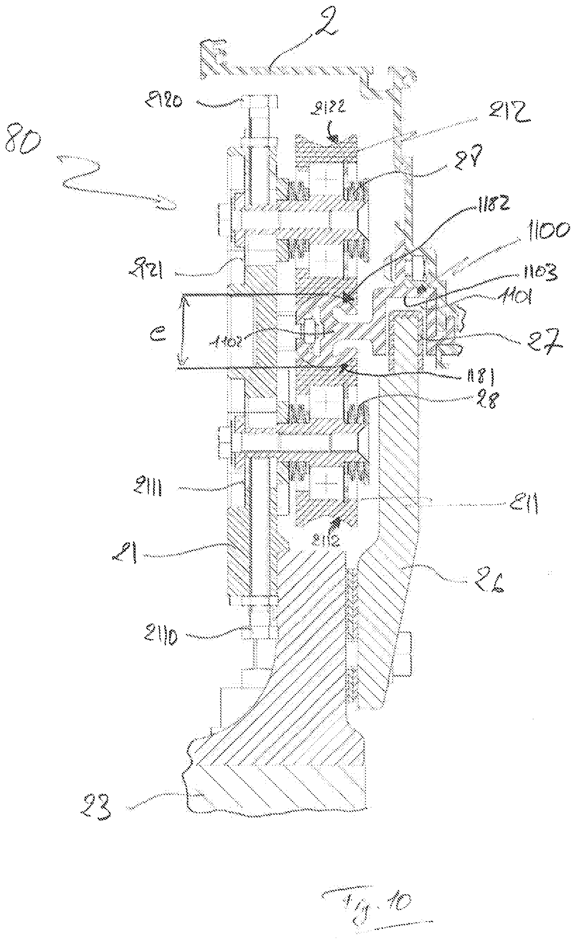

Selon un mode de réalisation de l'invention, un système de support et de guidage 80 va maintenant être décrit en référence aux figures 9 et 10.

Dans un premier temps, nous allons décrire le premier ensemble de galets 2210, 211 et 212 du système de support et de guidage 80. Il comporte un galet principal 2210 et des premier 211 et deuxième 212 galets secondaires. Le galet principal 2210 comprend, selon l'invention, deux galets 2211 et 2212 positionnés l'un derrière l'autre dans la direction de déplacement du rail 1100. Les deux galets 2211 et 2212 sont identiques. De plus, d'une manière préférentielle mais facultative, ils sont similaires aux galets secondaires 211 et 212 en taille et/ou en forme. Selon l'invention, les deux galets 2211 et 2212 sont montés, au moins mobiles à rotation autour de leur axe propre, sur une platine de liaison 2213. Cette platine de liaison 2213 est elle-même montée mobile à rotation sur le premier pilier 22. Cela permet d'assurer un contact avec le rail 1100 quel que soit l'orientation de ce dernier par rapport au premier pilier 22, et d'assurer ainsi une répartition optimale des charges du vantail 2 sur les deux galets 2211 et 2212, quel que soit le positionnement du rail 1100 et donc du vantail 2 par rapport au premier pilier 22.

D'autre part, ici illustré, le premier ensemble de galets comporte en outre un galet supplémentaire 2214 associé au galet principal 2210 sur le premier pilier 22. Les deux galets principal 2210 et supplémentaire 2214 sont positionnés sur le premier pilier 22 de manière similaire ou symétrique au positionnement des deux galets secondaires 211 et 212 sur le deuxième pilier 21. En particulier, selon le mode de réalisation illustré à la figure 9, le galet supplémentaire 2214 est situé à la verticale de l'axe de rotation de la platine de liaison 2213 du galet principal 2210. Cela permet de prévenir un basculement, dans son plan, du vantail en position ouverte dans certaines situations.

Le système de support et de guidage 80 selon l'invention comporte un rail 1100 de type profilé et fixé, lors d'un montage au vantail 2. Le rail 1100 comporte une première zone 1102 qui est destinée à coopérer avec le premier ensemble de galets 211,212,2210,2214. Pour cela, le rail 1100 comporte, au niveau de la première zone 1102, une bande de roulement aménagée sur la surface supérieure 1182 de forme convexe, ici en arc de cercle. Le rail 1100 comporte en outre une bande roulement aménagée sur la surface inférieure 1181 de forme convexe aussi, ici, de nouveau, en arc de cercle. Les bandes de roulement aménagée sur la surface supérieure 1182 et aménagée sur la surface inférieure 1181 sont, ici, symétriques en miroir l'une par rapport à l'autre.

Dans un mode de réalisation particulier, les bandes de roulement aménagées respectivement sur les surfaces supérieure 1182 et inférieure 1181 du rail de guidage 1100 sont inscrites dans un cercle, de manière à réaliser, lors d'un fonctionnement, une fonction pivot avec les galets : ainsi, un défaut de verticalité du vantail 2 ne génère aucun effort dans les galets.

D'autre part, le rail 1100 comporte une deuxième zone 1101, adjacente à la première zone 1102, au niveau de laquelle :
- le rail 1100 est fixé au vantail 2
- le rail 1100 comprend une glissière 1103 en forme de « U » inversé, la glissière 1103 s'étendant parallèlement le long d'un axe longitudinal du rail 1100.

La glissière 1103, lors d'une installation, est destinée à recevoir à coulissement, entre les branches du « U », des moyens formant butée 27 situés, ici, à une extrémité libre d'une pièce de transmission 26 fixée sur le deuxième pilier 21, au niveau d'une base de celui au voisinage de la platine 23. Une pièce de transmission 26 est aussi prévue de manière similaire sur le premier pilier 22.dans les deux cas, l'extrémité libre portant les moyens formant butée 27 s'étend en regard et à distance du galet principal 2210 et du premier galet secondaire 211 respectivement. Un jeu de fonctionnement est prévu entre les moyens formant butée 27 et les branches du « U » de sorte à permettre un déplacement relatif limité des moyens formant butée 27 selon une direction latérale au sein de la glissière 1103.

D'autre part, les différents galets 211, 212, 2211, 2212 et 2214 sont, ici, des galets en forme de chevrons. En effet, comme illustré à la figure 10, une surface de roulement 2112 du galet secondaire 211 présente une forme concave en section qui a la forme d'un chevron. Il en est de même pour une surface de roulement 2122 de l'autre galet secondaire 212. Ces surfaces de roulement 2112 et 2122, lors d'un fonctionnement du système de support et de guidage 80 selon l'invention, viennent en appui et rouler sur des bandes de roulement galbées respectivement aménagées sur les surfaces 1181 et 1182 du rail 1100. Cela permet un auto-centrage du vantail 2 sur lesdits galets ainsi que la possibilité de transmettre des efforts latéraux du vantail 2 aux piliers 21 et 22.

Les différents galets du premier ensemble de galets sont, chacun, montés mobiles à rotation sur leur pilier 21 ou 22 associé et à translation limitée le long de leur axe de rotation. Ces déplacements en translation selon l'axe de rotation des galets s'effectuent à l'encontre de moyens élastiques de limitation 28. Ces moyens élastiques de limitation 28 sont ici des empilements de rondelles Belleville, deux rondelles Belleville adjacentes étant positionnées en miroir l'une contre l'autre. De plus, dans le mode de réalisation illustré aux figures 9 et 10, un empilement de rondelles Belleville similaire est positionné de part et d'autre de chacun des galets. Ainsi, pour chacun des galets 211,212, 2211, 2212 et 2214, il y a deux empilements de rondelles Belleville par axe de galet. Un tel système constitue un boitier à ressorts. Chaque empilement 28 de rondelles Belleville se comporte comme un ressort taré.

Ainsi, lorsqu'un effort latéral est subit par le vantail 2, par exemple suite à un coup de vent, une poussée foule ou un pompage dû au passage d'un train, ce dernier engendre un déplacement latéral dudit vantail 2. L'effort latéral est transmis au rail 1100 fixé sur le vantail 2. Du fait de la forme des surfaces de roulement des galets du premier ensemble de galets coopérant avec les bandes de roulement 1181 et 1182 convexes du rail 1100, l'effort latéral est transmis aux galets qui se déplacent en translation selon leur axe de rotation à l'encontre des moyens élastiques de limitation 28 tant que le déplacement latéral induit reste inférieur au jeu de fonctionnement entre les moyens formant butée 27 et les branches de la forme en « U » de la glissière 1103. L'effort latéral est alors transmis aux piliers 21 et 22.

D'autre part, du fait que chaque empilement 28 se comporte comme un ressort taré, tant que l'effort latéral qui tend à générer un déplacement latéral ne dépasse pas la valeur de tarage des empilements 28, il n'y a aucun déplacement latéral et les moyens formant butée 27 n'ont aucun rôle. Si l'effort latéral augmente, la force de tarage est dépassée, les rondelles Belleville s'écrasent, les galets glissent sur leur axe, et le vantail se déplace latéralement jusqu'à ce que les moyens formant butée 27 viennent en appui contre l'une des branches de la forme en « U » de la glissière 1103.

Si l'effort latéral est tel que le déplacement latéral induit est supérieur au jeu de fonctionnement précédent, alors les moyens formant butée 27 viennent en appui contre l'une des branches de la forme en « U » de la glissière 1103 : une partie de l'effort latéral est transmis aux piliers 21 et 22 via les galets et les moyens élastiques de limitation 28, l'autre partie de l'effort latéral est transmis aux piliers 21 et 22 via les moyens formant butée 27 et la pièce de transmission 26. Une telle structure permet de protéger le premier ensemble de galets d'un effort latéral important. De plus, une telle structure permet de réaliser aussi un guidage latéral du vantail 2 lors d'un déplacement de ce dernier, ce qui remplace le deuxième ensemble de galets formé par les galets des premier 225 et deuxième 215 paires de galets du mode de réalisation précédemment décrit du système de support et de guidage 8, 8' selon l'invention.

D'autre part, les différents galets 2210,2214, 211 et 212 du premier ensemble de galets sont réglables en position, en particulier en hauteur. Pour cela, l'axe des galets 211, 212, 2210 et 2214 est reçu respectivement dans une lumière oblongue, ici verticale, 2111, 2121, 2217 et 2216 aménagée dans une épaisseur du pilier 21, 22 associé. Des moyens de réglage 2110, 2120, 2215 en position au sein de la lumière oblongue sont prévue à cet effet. Ici, les moyens de réglage en position sont des boulons vissés dans l'épaisseur des piliers 21,22 et dont une extrémité débouche dans la lumière oblongue perpendiculairement à l'axe des galets et vient en appui contre celui-ci.

Dans une autre variante de réalisation, le système de guidage et de support 8 est secondé, dans une partie haute de la partie fixe 3 et du vantail 2, par un système complémentaire de guidage comportant un rail et des ensembles de galets/patins similaires en structure au deuxième ensemble de galets/patins 215,225. Cela permet de renforcer la résistance aux efforts latéraux que peut subir le vantail 2 du fait du vent, de l'effet de pompage ou de la poussée de foule.

Nous allons maintenant, en référence aux figures 2 à 4, décrire un mécanisme d'entrainement 40 permettant de mouvoir les vantaux coulissant 2 de la porte palière 1 selon l'invention de manière synchronisée.

Le mécanisme d'entrainement 40 comporte un moteur d'entrainement 41. Il est positionné, ici entre les piliers du support de rail 30, sous le rail 12. Il entraine une poulie motrice 42 en rotation. Le mécanisme d'entrainement comporte un premier 51 et un second 52 éléments allongés flexibles d'entrainement. Les éléments allongés flexibles d'entrainement 51 et 52 peuvent être des courroies, des câbles ou encore des chaînes. Les éléments allongés flexibles d'entrainement 51, 52 sont montés de manière croisée, le moteur d'entrainement 41 n'entraînant directement qu'un seul 52 des éléments allongés flexible d'entrainement 51,52.

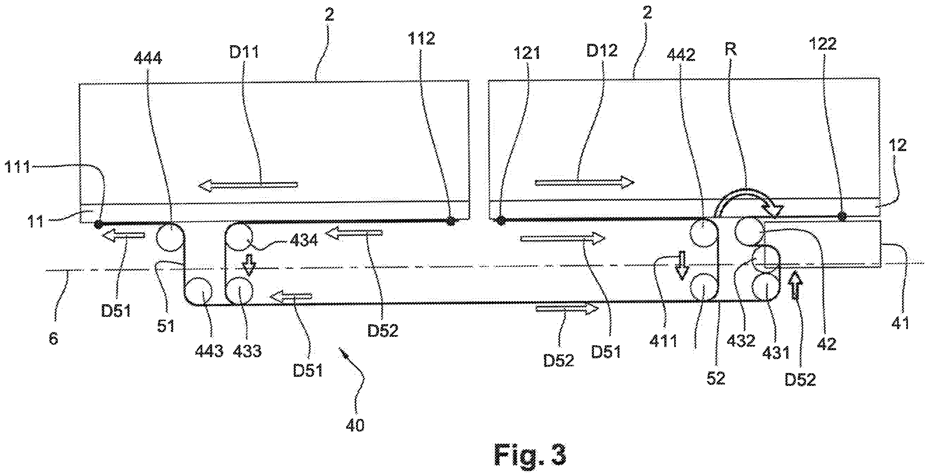

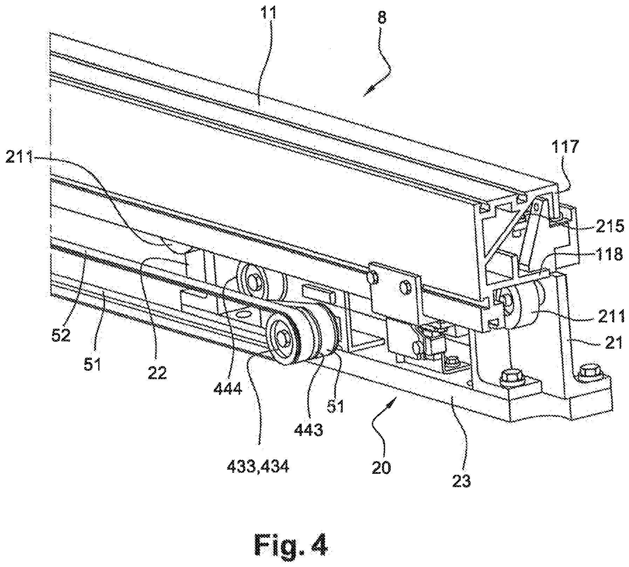

Le premier élément allongé flexible d'entrainement 51 est fixé, au niveau d'une première extrémité 111, à une extrémité gauche du premier rail 11 et, au niveau d'une deuxième extrémité 121, à une extrémité gauche du deuxième rail 12. Des poulies de renvoi 441,442,443,444 permettent de tendre et de définir un cheminement du premier élément allongé flexible d'entrainement 51, en particulier en partie sous le seuil de porte 6 de sorte à faire passer le premier élément allongé flexible d'entrainement 51 sous l'ouverture adjacente des parties fixes 3 de la porte palière 1 selon l'invention. Pour cela, deux poulies de renvoi 443 et 444 sont situées au niveau de la première partie fixe 3 et deux poulies de renvoi 441,442 sont situées au niveau de la deuxième partie fixe 3, comme cela est illustré en figure 3. En variante de réalisation, les poulies de renvoi 441 et 442 peuvent être une seule et unique poulie de renvoi. Chaque paire de poulies 443,444 et 441 et 442 peuvent être décalées l'une par rapport à l'autre dans une direction horizontale, comme cela est illustré par exemple en figure 4 pour la paire de poulies 443,444.

De manière similaire, le second élément allongé flexible d'entrainement 52 est fixé, au niveau d'une première extrémité 112, à une extrémité droite du premier rail 11 et, au niveau d'une deuxième extrémité 122, à une extrémité droite du deuxième rail 12. De nouveau, des poulies de renvoi 431,432,433,434 permettent de tendre et de définir un cheminement du second élément allongé flexible d'entrainement 52, en particulier en partie sous le seuil de porte 6 de sorte à faire passer le second élément allongé flexible d'entrainement 52 sous l'ouverture adjacente des parties fixes 3 de la porte palière 1 selon l'invention. Pour cela, deux poulies de renvoi 433 et 434 sont situées au niveau de la première partie fixe 3 et deux poulies de renvoi 431,432 sont situées au niveau de la deuxième partie fixe 3, comme cela est illustré en figure 3. En variante de réalisation, les poulies de renvoi 433 et 434 peuvent être une seule et unique poulie de renvoi, comme cela est illustré en figure 4. Dans une autre variante de réalisation, les poulies 431 et 432 peuvent être une seule et unique poulie de renvoi. Chaque paire de poulies 433,434 et 431 et 432 peuvent être décalées l'une par rapport à l'autre dans une direction horizontale.

De plus, ici, le second élément allongé flexible d'entrainement 52 coopère avec la poulie motrice 42 pour être entraîné par le moteur d'entrainement 41.

Les deux éléments allongés flexibles d'entrainement 51,52 sont positionnés et cheminent côte à côte, l'ensemble des poulies de renvoi 431,432,433,434 étant décalé axialement à l'ensemble des poulies de renvoi 441,442,443,444. Ainsi il est possible de monter des poulies des deux ensembles sur un même axe, comme cela est illustré en figure 4 pour les poulies 433/434 et 443. De plus, comme il n'y a que les deux éléments allongés flexibles d'entraînement 51,52 qui cheminent côte à côte dans le seuil 6, la section du seuil 6 est par conséquent très faible, et donc son encombrement dans le génie civil est aussi très faible : cela facilite la préparation du génie civile au niveau du nez de quai et la pose du module complet de porte palière 1.

Lors d'un fonctionnement, que nous allons illustrer pour le passage d'une position fermée à une position ouverte des vantaux coulissant 2 en référence à la figure 3, la poulie motrice 42 entraînée par le moteur d'entrainement 41 selon un mouvement de rotation R engrène le second élément allongé flexible d'entrainement 52 qui se déplace alors selon un déplacement D52. Ce déplacement D52 du second élément allongé flexible d'entrainement 52 a pour effet de tirer sur l'extrémité 112 du second élément allongé flexible d'entrainement 52. Cela entraine alors le premier rail 11 dans un mouvement D11 et par conséquent l'extrémité 111 du premier élément allongé flexible d'entrainement 51. Ce dernier effectue alors un déplacement D51 le long de son cheminement qui a pour conséquence de tirer sur l'extrémité 121 du premier élément allongé flexible d'entrainement 51. Dès lors, le deuxième rail 12 est mis en mouvement selon un déplacement D12, opposé et symétrique du déplacement D11 du premier rail 11. Le deuxième rail 12 entraine alors, dans son mouvement D12, l'extrémité 122 du second élément allongé flexible d'entrainement 52, bouclant ainsi une boucle d'entrainement formée successivement du second élément allongé flexible d'entrainement 52, du premier rail 11, du premier élément allongé flexible d'entrainement 51 et du second rail 12.

Ainsi de manière très simple, les deux vantaux coulissant 2 sont mis en mouvement entre leurs positions d'ouverture et de fermeture par un seul moteur d'entrainement 41, tout en assurant une parfaite synchronisation entre les deux vantaux coulissant 2. Cela évite l'utilisation de deux systèmes de motorisations et deux systèmes de commande (un pour chaque vantail)

## Revendications

1. Système de guidage et de support (8;80) pour un vantail (2) de porte palière (1) de quai, le vantail pouvant se déplacer par rapport à un panneau fixe (3) selon un mouvement de translation horizontale (D11,D12) dans un plan du vantail entre des positions ouverte et fermée dans lesquelles le vantail dégage ou obstrue au moins en partie une ouverture adjacente au panneau fixe, comprenant :
- un rail (11,12;1100) configuré pour être fixé au vantail (2) et s'étendant dans une direction du mouvement de translation horizontale
- un support de rail (20) qui comporte une platine (23) formant une base permettant de fixer le support de rail (20) sur le nez de quai et qui comporte un premier pilier (22) fixé sur la platine (23) et s'étendant en saillie de celle-ci verticalement et un deuxième pilier (21) fixé sur la platine (23), à distance du premier pilier (22), et s'étendant en saillie de celle-ci verticalement,
- un premier ensemble de galets (211, 212,2210;2114) coopérant avec le rail pour le guider et le supporter dans le mouvement de translation horizontale, chaque galet de l'ensemble de galets comprenant un axe de rotation perpendiculaire au plan du vantail, le premier ensemble de galets étant constitué :
- D'un galet principal (2210) en contact avec une surface inférieure d'appui (1181) du rail, le galet principal (2210) étant monté libre à rotation sur un côté du premier pilier (22)
- De premier (211) et second (212) galets secondaires décalés l'un par rapport à l'autre selon au moins une direction verticale et en contact respectivement avec la surface inférieure d'appui (1181) du rail et une surface supérieure d'appui (1182) du rail, les premier et second galets secondaires étant positionnés à distance du galet principal selon la direction du mouvement de translation horizontale et dans le sens d'un passage de la position fermée à la position ouverte, le premier (211) et le second (212) galets secondaires étant montés libres à rotation sur un côté du deuxième pilier (21), le galet principal (2210) comprenant deux galets (2211, 2212) identiques, positionnés l'un derrière l'autre dans la direction du mouvement de translation horizontale, les deux galets (2211, 2212) étant montés, au moins mobile à rotation autour de leur axe propre, sur une platine de liaison (2213), cette platine de liaison (2213) étant elle-même montée mobile à rotation sur le premier pilier (22).

2. Système selon la revendication 1, **caractérisé en ce que** le second galet secondaire (212) est situé entre le galet principal et le premier galet secondaire (211).

3. Système selon l'une des revendications 1 à 2, **caractérisé en ce que** le second galet secondaire est décalé dans la direction du mouvement de translation horizontale par rapport au premier galet secondaire.

4. Système selon l'une des revendications 1 à 3, **caractérisé en ce qu'**il comporte un deuxième ensemble de galets/patins (215,225) destiné à guider latéralement le rail dans une direction horizontale perpendiculaire à la direction du mouvement de translation horizontale.

5. Système selon la revendication 4, **caractérisé en ce que** le deuxième ensemble de galets comporte une première paire de galets (225) positionnée au niveau de l'un (221) parmi le galet principal (2210) et un des galets secondaires (211,212).

6. Système selon la revendication 5, **caractérisé en ce que** le deuxième ensemble comporte une deuxième paire de galets (215) positionnée au niveau de l'autre (211) parmi le galet principal (2210) et l'un des galets secondaires (211,212).

7. Système selon l'une des revendications 1 à 6, **caractérisé en ce que** le premier ensemble de galets comporte un galet supplémentaire (2214) en contact avec la surface supérieure d'appui (1182) du rail et positionnée à la verticale de l'axe de rotation de la platine de liaison (2213) du galet principal (2210).

8. Système selon l'une des revendications 1 à 7, **caractérisé en ce que** les surfaces inférieure et supérieure d'appui comportent des bandes de roulement inscrites dans un cercle de sorte à former une fonction pivot entre le rail et le premier ensemble de galets, le rail (1100) comportant une première zone (1102) qui est destinée à coopérer avec le premier ensemble de galets (211, 212, 2210, 2214) et qui comporte une bande de roulement aménagée sur la surface supérieure (1182) de forme convexe en arc de cercle et une bande de roulement aménagée sur la surface inférieure (1181) de forme convexe en arc de cercle, les différents galets (211, 212, 2211, 2212, 2214) étant des galets en forme de chevrons, les surfaces de roulement (2112, 2122) des galets secondaires (211, 212) présentant chacune une forme concave en section qui a la forme d'un chevron, ces surfaces de roulement (2112, 2122), lors d'un fonctionnement du système, venant en appui et rouler sur des bandes de roulement galbées respectivement aménagées sur les surfaces (1181, 1182) du rail (1100).

9. Système selon la revendication 8, **caractérisé en ce que** le rail (1100) comporte une deuxième zone (1101), adjacente à la première zone (1102), au niveau de laquelle :
- le rail (1100) est configuré pour être fixé au vantail (2),
- le rail (1100) comprend une glissière (1103) en forme de « U » inversé, la glissière (1103) s'étendant parallèlement le long d'un axe longitudinal du rail (1100),
la glissière (1103), lors d'une installation, étant destinée à recevoir à coulissement, entre les branches du « U », des moyens formant butée (27) situés à une extrémité libre d'une pièce de transmission (26) fixée sur le deuxième pilier (21), au niveau d'une base de celui au voisinage de la platine (23).

10. Système selon l'une des revendications 1 à 9, **caractérisé en ce que**, les galets du premier ensemble de galets sont montés mobiles à translation sur leur axe à l'encontre de moyens élastiques de limitation (28), les moyens de élastiques de limitation formant des ressorts tarés.

11. Porte palière (1) de quai comportant un seuil (6), un premier panneau fixe (3) et un premier vantail (2) pouvant se déplacer par rapport au premier panneau fixe selon un mouvement de translation horizontale (D11,D12) dans un plan du vantail entre des positions ouverte et fermée dans lesquelles le premier vantail dégage ou obstrue au moins en partie une ouverture adjacente au premier panneau fixe, **caractérisée en ce qu'**elle comporte un système de guidage et de support (8;80) du premier vantail selon l'une des revendications 1 à 10.

12. Porte palière selon la revendication 11, **caractérisée en ce que** le rail (11,12;1100) est solidaire du premier vantail.

13. Porte palière selon l'une des revendications 11 à 12, **caractérisée en ce que** le système de guidage et de support est situé dans une partie inférieure de la porte palière.

14. Porte palière selon l'une des revendications 11 à 13, **caractérisée en ce qu'**elle comporte :
- un second panneau fixe, séparé du premier panneau fixe par l'ouverture et le seuil ;
- un second vantail pouvant se déplacer par rapport au second panneau fixe selon un mouvement de translation horizontale (D12) dans un plan du vantail entre des positions ouverte et fermée dans lesquelles le second vantail dégage ou obstrue en partie l'ouverture, le mouvement de translation horizontale (D12)du second vantail étant symétrique du mouvement de translation horizontale (D11) du premier vantail ; et,
- un système de guidage et de support du second vantail selon l'une des revendications 1 à 10.

15. Porte palière selon la revendication 14, **caractérisé en ce qu'**elle comporte un mécanisme d'entrainement (40) des vantaux comportant un moteur d'entrainement (41), deux éléments allongés flexibles d'entrainement (51,52) fixés de manière croisée, le moteur d'entrainement entraînant un seul (52) des deux éléments allongés flexibles d'entrainement (51,52), l'un (51) des éléments allongés flexibles d'entrainement comportant deux extrémités (111,121) fixées respectivement à une extrémité gauche du rail (11,12) du système de guidage et de support des premier et second vantaux et l'autre (52) des éléments allongés flexibles d'entrainement comportant deux extrémités (112,122) fixées respectivement à une extrémité droite du rail (11,12) du système de guidage et de support des premier et second vantaux.

16. Porte palière selon la revendication 15, **caractérisé en ce que** les éléments allongés flexibles d'entraînement cheminent en partie dans ou sous le seuil.

17. Porte palière selon la revendication 15 ou 16, **caractérisé en ce que** les éléments allongés flexibles d'entrainement sont des courroies, des chaînes ou des câbles.

18. Porte palière selon l'une des revendications 15 à 17, **caractérisé en ce que** le moteur d'entrainement est situé dans la partie basse de l'un parmi les premier et second panneaux fixes.

19. Porte palière selon l'une des revendications 15 à 18, **caractérisé en ce que** le moteur d'entrainement est positionné sous le rail du système de guidage et de support de l'un parmi les premier et second panneaux fixes.

## Patentansprüche

1. Führungs- und Trägersystem (8; 80) für einen Flügel (2) einer Bahnsteigzugangstür (1), wobei sich der Flügel relativ zu einer feststehenden Platte (3) in einer horizontalen Translationsbewegung (D11, D12) in einer Ebene des Flügels zwischen einer geöffneten und einer geschlossenen Position bewegen kann, in denen der Flügel mindestens teilweise eine Öffnung angrenzend an die feststehende Platte freigibt oder versperrt, umfassend:
- eine Schiene (11, 12; 1100), die zum Befestigen an dem Flügel (2) konfiguriert ist und sich in einer Richtung der horizontalen Translationsbewegung erstreckt
- einen Schienenträger (20), der eine Leiste (23) aufweist, die eine Basis ausbildet, die es ermöglicht, den Schienenträger (20) an der Bahnsteigkante zu befestigen, und der einen ersten Pfeiler (22), der an der Leiste (23) befestigt ist und sich vorspringend von dieser vertikal erstreckt, und einen zweiten Pfeiler (21) aufweist, der an der Leiste (23) in einem Abstand von dem ersten Pfeiler (22) befestigt ist und sich vorspringend von dieser vertikal erstreckt,
- einen ersten Rollensatz (211, 212, 2210; 2114), der mit der Schiene zum Führen davon und Tragen davon in der horizontalen Translationsbewegung zusammenwirkt, jede Rolle des Rollensatzes umfassend eine Drehachse senkrecht zu der Ebene des Flügels, wobei der erste Rollensatz besteht aus:
- einer Hauptrolle (2210) in Kontakt mit einer unteren Auflageoberfläche (1181) der Schiene, wobei die Hauptrolle (2210) auf einer Seite des ersten Pfeilers (22) frei drehbar montiert ist
- eine erste (211) und eine zweite (212) Sekundärrolle, die relativ zueinander in mindestens einer vertikalen Richtung versetzt sind und jeweils in Kontakt mit der unteren Auflageoberfläche (1181) der Schiene und einer oberen Auflageoberfläche (1182) der Schiene stehen, wobei die erste und die zweite Sekundärrolle in die Richtung der horizontalen Translationsbewegung und in der Richtung eines Übergangs von der geschlossenen Position in die geöffnete Position in einem Abstand von der Hauptrolle positioniert sind, wobei die erste (211) und die zweite (212) Sekundärrolle auf einer Seite des zweiten Pfeilers (21) frei drehbar montiert sind, die Hauptrolle (2210) umfassend zwei identische Rollen (2211, 2212), die in die Richtung der horizontalen Translationsbewegung hintereinander positioniert sind, wobei die zwei Rollen (2211, 2212) mindestens um ihre eigene Achse drehbar beweglich auf einer Verbindungsleiste (2213) montiert sind, wobei diese Verbindungsleiste (2213) ihrerseits drehbar beweglich auf dem ersten Pfeiler (22) montiert ist.

2. System nach Anspruch 1, **dadurch gekennzeichnet, dass** sich die zweite Sekundärrolle (212) zwischen der Hauptrolle und der ersten Sekundärrolle (211) befindet.

3. System nach einem der Ansprüche 1 bis 2,
**dadurch gekennzeichnet, dass** die zweite Sekundärrolle in die Richtung der horizontalen Translationsbewegung relativ zu der ersten Sekundärrolle versetzt ist.

4. System nach einem der Ansprüche 1 bis 3,
**dadurch gekennzeichnet, dass** es einen zweiten Satz Rollen/Füße (215, 225) umfasst, der dazu bestimmt ist, die Schiene in eine horizontalen Richtung senkrecht zu der Richtung der horizontalen Translationsbewegung seitlich zu führen.

5. System nach Anspruch 4, **dadurch gekennzeichnet, dass** der zweite Rollensatz ein erstes Rollenpaar (225) umfasst, das an einer (221) der Hauptrolle (2210) und einer der Sekundärrollen (211, 212) positioniert ist.

6. System nach Anspruch 5, **dadurch gekennzeichnet, dass** der zweite Satz ein zweites Rollenpaar (215) umfasst, das an der anderen (211) der Hauptrolle (2210) und der einen der Sekundärrollen (211, 212) positioniert ist.

7. System nach einem der Ansprüche 1 bis 6,
**dadurch gekennzeichnet, dass** der erste Rollensatz eine zusätzliche Rolle (2214) aufweist, die in Kontakt mit der oberen Auflageoberfläche (1182) der Schiene steht und vertikal zu der Drehachse der Verbindungsleiste (2213) der Hauptrolle (2210) positioniert ist.

8. System nach einem der Ansprüche 1 bis 7,
**dadurch gekennzeichnet, dass** die untere und die obere Auflageoberfläche in einen Kreis aufgenommene Laufflächen aufweisen, um eine Schwenkfunktion zwischen der Schiene und dem ersten Rollensatz auszubilden, wobei die Schiene (1100) eine erste Zone (1102) aufweist, die dazu bestimmt ist, mit dem ersten Rollensatz (211, 212, 2210, 2214) zusammenzuwirken und die eine kreisbogenförmige Lauffläche, die auf der konvexen Oberfläche (1182) angeordnet ist, und eine kreisbogenförmige Lauffläche aufweist, die auf der unteren Oberfläche (1181) angeordnet ist, wobei die unterschiedlichen Rollen (211, 212, 2211, 2212, 2214) zickzackförmige Rollen sind, die Rolloberflächen (2112, 2122) der Sekundärrollen (211, 212) im Querschnitt jeweils eine konkave Form vorweisen, die die Form eines Zickzackkörpers besitzt, wobei diese Rolloberflächen (2112, 2122) während eines Betriebs des Systems in Auflage kommen und auf geschwungenen Laufflächen rollen, die jeweils auf den Oberflächen (1181, 1182) der Schiene (1100) angeordnet sind.

9. System nach Anspruch 8, **dadurch gekennzeichnet, dass** die Schiene (1100) eine zweite Zone (1101) angrenzend an die erste Zone (1102) umfasst, an der:
- die Schiene (1100) zum Befestigen an dem Flügel (2) konfiguriert ist,
- die Schiene (1100) eine Gleitschiene (1103) in Form eines umgekehrten "U" umfasst, wobei sich die Gleitschiene (1103) parallel entlang einer Längsachse der Schiene (1100) erstreckt,
wobei die Gleitschiene (1103) während einer Installation dazu bestimmt ist, zwischen den Schenkeln des "U" Mittel gleitend aufzunehmen, die einen Anschlag (27) ausbilden, die sich an einem freien Ende eines Übertragungsteils (26) befinden, das an dem zweiten Pfeiler (21) an einer Basis davon in der Nähe der Leiste (23) befestigt ist.

10. System nach einem der Ansprüche 1 bis 9,
**dadurch gekennzeichnet, dass** die Rollen des ersten Rollensatzes um ihre Achse gegen elastische Begrenzungsmittel (28) translatorisch beweglich montiert sind, wobei die elastischen Begrenzungsmittel tarierte Federn ausbilden.

11. Bahnsteigzugangstür (1), die eine Schwelle (6), eine erste feststehende Platte (3) und einen ersten Flügel (2) aufweist, der sich relativ zu der ersten feststehenden Platte in einer horizontalen Translationsbewegung (D11, D12) in einer Ebene des Flügels zwischen der geöffneten und der geschlossenen Position bewegen kann, in der der erste Flügel eine Öffnung, die an die erste feststehende Platte angrenzt, mindestens teilweise freigibt oder versperrt,
**dadurch gekennzeichnet, dass** sie ein Führungs- und Trägersystem (8; 80) des ersten Flügels nach einem der Ansprüche 1 bis 10 umfasst.

12. Zugangstür nach Anspruch 11, **dadurch gekennzeichnet, dass** die Schiene (11, 12; 1100) mit dem ersten Flügel fest verbunden ist.

13. Zugangstür nach einem der Ansprüche 11 bis 12,
**dadurch gekennzeichnet, dass** sich das Führungs- und Trägersystem in einem unteren Teil der Zugangstür befindet.

14. Zugangstür nach einem der Ansprüche 11 bis 13,
**dadurch gekennzeichnet, dass** sie aufweist:
- eine zweite feststehende Platte, die durch die Öffnung und die Schwelle von der ersten feststehenden Platte getrennt ist;
- einen zweiten Flügel, der sich relativ zu der zweiten feststehenden Platte in einer horizontalen Translationsbewegung (D12) in einer Ebene des Flügels zwischen der geöffneten und der geschlossenen Position bewegen kann, in denen der zweite Flügel die Öffnung teilweise freigibt oder blockiert, wobei die horizontale Translationsbewegung (D12) des zweiten Flügels symmetrisch zu der horizontalen Translationsbewegung (D11) des ersten Flügels ist; und,
- ein Führungs- und Trägersystem des zweiten Flügels nach einem der Ansprüche 1 bis 10.

15. Zugangstür nach Anspruch 14, **dadurch gekennzeichnet, dass** sie einen Antriebsmechanismus (40) der Flügel umfasst, der einen Antriebsmotor (41), zwei über Kreuz befestigte längliche flexible Antriebselemente (51, 52) aufweist, wobei der Antriebsmotor nur eines (52) der zwei länglichen flexiblen Antriebselemente (51, 52) antreibt, wobei das eine (51) der länglichen flexiblen Antriebselemente zwei Enden (111, 121) aufweist, die jeweils an einem linken Ende der Schiene (11, 12) des Führungs- und Trägersystems des ersten und des zweiten Flügels befestigt sind, und das andere (52) der länglichen flexiblen Antriebselemente zwei Enden (112, 122) umfasst, die jeweils an einem rechten Ende der Schiene (11, 12) des Führungs- und Trägersystems des ersten und des zweiten Flügels befestigt sind.

16. Zugangstür nach Anspruch 15, **dadurch gekennzeichnet, dass** die länglichen flexiblen Antriebselemente teilweise in oder unter der Schwelle verlaufen.

17. Zugangstür nach Anspruch 15 oder 16, **dadurch gekennzeichnet, dass** die länglichen flexiblen Antriebselemente Riemen, Ketten oder Kabel sind.

18. Zugangstür nach einem der Ansprüche 15 bis 17,
**dadurch gekennzeichnet, dass** sich der Antriebsmotor in dem unteren Teil einer der ersten und der zweiten feststehenden Platte befindet.

19. Zugangstür nach einem der Ansprüche 15 bis 18,
**dadurch gekennzeichnet, dass** der Antriebsmotor unterhalb der Schiene des Führungs- und Trägersystems einer der ersten und der zweiten feststehenden Platte positioniert ist.

## Claims

1. A guiding and support system (8; 80) for a leaf (2) of a platform screen door (1), the leaf being able to be moved in relation to a fixed panel (3) by a horizontal translational movement (D11, D12) in a plane of the leaf between open and closed positions in which the leaf at least partly frees or blocks an opening adjacent to the fixed panel, comprising:
- a rail (11, 12; 1100) configured to be fixed to the leaf (2) and extending in a direction of the horizontal translational movement,
- a rail support (20) comprising a plate (23) forming a base that makes it possible to fix the rail support (20) onto the platform edge coping and comprising a first post (22) fixed onto the plate (23) and extending by protruding therefrom vertically and a second post (21) fixed onto the plate (23), at a distance from the first post (22), and extending by protruding therefrom vertically,
- a first set of rollers (211, 212; 2210; 2114) cooperating with the rail to guide it and support it in the horizontal translational movement, each roller of the set of rollers comprising an axis of rotation at right angles to the plane of the leaf, said first set of rollers consists:
- of a main roller (2210) in contact with a bottom bearing surface (1181) of the rail, said main roller (2210) being mounted free to rotate on one side of the first post (22),
- of first (211) and second (212) secondary rollers offset relative to one another in at least one vertical direction and in contact respectively with the bottom bearing surface (1181) of the rail and a top bearing surface (1182) of the rail, the first and second secondary rollers being positioned at a distance from the main roller in the direction of the horizontal translational movement and in the direction of a transition from the closed position to the open position, said first and second secondary rollers (211, 212) being mounted free to rotate on a side of the second post (21), the main roller (2210) comprising two identical rollers (2211, 2212) positioned one behind the other in the direction of the horizontal translation movement, said two rollers (2211, 2212) being mounted, at least rotationally mobile about their own axis, on a link plate (2213), said link plate (2213) being itself mounted to be rotationally mobile on the first post (22).

2. The system as claimed in claim 1, **characterized in that** the second secondary roller (212) is situated between the main roller and the first secondary roller (211).

3. The system as claimed in either of claims 1 and 2, **characterized in that** the second secondary roller is offset in the direction of the horizontal translational movement in relation to the first secondary roller.

4. The system as claimed in one of claims 1 to 3, **characterized in that** it comprises a second set of rollers/skids (215, 225) intended to laterally guide the rail in a horizontal direction at right angles to the direction of the horizontal translational movement.

5. The system as claimed in claim 4, **characterized in that** the second set of rollers comprises a first pair of rollers (225) positioned at the level of one (221) out of the main roller (2210) and one of the secondary rollers (211, 212).

6. The system as claimed in claim 5, **characterized in that** the second set comprises a second pair of rollers (215) positioned at the level of the other (211) out of the main roller (2210) and one of the secondary rollers (211, 212).

7. The system as claimed in one of claims 1 to 6, **characterized in that** the first set of rollers comprises an additional roller (2214) in contact with the top bearing surface (1182) of the rail and positioned vertically to the rotation axis of the link plate (2213) of the main roller (2210).

8. The system as claimed in one of claims 1 to 8, **characterized in that** the bottom and top bearing surfaces comprise rolling tracks inscribed in a circle so as to form a pivot function between the rail and the first set of rollers, the rail (1100) comprising a first zone (1102) which is intended to cooperate with the first set of rollers (211, 212, 2210, 2214) and comprising a rolling track formed on the top surface (1182) of convex form in the form of a circular arc and a rolling track formed on the bottom surface (1181) of convex form in the form of a circular arc, the various rollers (211, 212, 2211, 2212 and 2214) being chevron-shaped rollers, the rolling surfaces (2112, 2122) of each secondary roller (211, 212) having a concave shape in section which takes the form of a chevron, these rolling surfaces (2112, 2122), in operation of the support and guiding system coming to bear and roll on rounded rolling tracks respectively formed on the surfaces (1181, 1182) of the rail (1100).

9. System according to claim 8, **characterized in that** the rail (1100) comprises a second zone (1101), adjacent to the first zone (1102) at which .
- the rail (1100) is configured to be fixed to the leaf (2),
- the rail (1100) comprises an inverted "U"-shaped slide (1103), the slide (1103) extending parallel along a longitudinal axis of the rail (1100),
the slide (1103), when installed, being intended to receive slidingly, between the legs of the "U", abutment-forming means (27) located at a free end of a transmission piece (26) fixed to the second post (21), at a base thereof in the vicinity of the plate (23).

10. The system as claimed in one of claims 1 to 9, **characterized in that** the rollers of the first set of rollers are mounted to be translationally mobile on their axis against elastic limiting means (28), the elastic limiting means forming calibrated springs.

11. A platform screen door (1) comprising a threshold (6), a first fixed panel (3) and a first leaf (2) that can be moved in relation to the first fixed panel by a horizontal translational movement (D11, D12) in a plane of the leaf between open and closed positions in which the first leaf at least partly frees or blocks an opening adjacent to the first fixed panel, **characterized in that** it comprises a guiding and support system (8; 80) for the first leaf as claimed in one of claims 1 to 10.

12. The screen door as claimed in claim 11, **characterized in that** the rail (11, 12; 1100) is secured to the first leaf.

13. The screen door as claimed in either of claims 11 and 12, **characterized in that** the guiding and support system is situated in a bottom part of the screen door.

14. The screen door as claimed in one of claims 11 to 13, **characterized in that** it comprises:
- a second fixed panel, separated from the first fixed panel by the opening and the threshold;
- a second leaf that can be moved in relation to the second fixed panel by a horizontal translational movement (D12) in a plane of the leaf between open and closed positions in which the second leaf partly frees or blocks the opening, the horizontal translational movement (D12) of the second leaf being symmetrical to the horizontal translational movement (D11) of the first leaf; and
- a guiding and support system for the second leaf as claimed in one of claims 1 to 10.

15. The screen door as claimed in claim 14, **characterized in that** it comprises a driving mechanism (40) for the leaves comprising a driving motor (41), two flexible elongate driving elements (51, 52) fixed crosswise, the driving motor driving just one (52) of the two flexible elongate driving elements (51, 52), one (51) of the flexible elongate driving elements comprising two ends (111, 121) fixed respectively to a left end of the rail (11, 12) of the guiding and support system for the first and second leaves and the other (52) of the flexible elongate driving elements comprising two ends (112, 122) fixed respectively to a right end of the rail (11, 12) of the guiding and support system for the first and second leaves.

16. The screen door as claimed in claim 15, **characterized in that** the flexible elongate driving elements run partly in or under the threshold.

17. The screen door as claimed in claim 15 or 16, **characterized in that** the flexible elongate driving elements are belts, chains or cables.

18. The screen door as claimed in one of claims 15 to 17, **characterized in that** the driving motor is situated in the bottom part of one out of the first and second fixed panels.

19. The screen door as claimed in one of claims 15 to 18, **characterized in that** the driving motor is positioned under the rail of the guiding and support system for one out of the first and second fixed panels.
